# EUROPEAN PATENT APPLICATION

(11) **EP 4 741 651 A1**
(43) Date of publication of application: **13.05.2026**
(21) Application number: 24211369.4
(22) Date of filing: 07.11.2024
(51) Int. Cl.: F03D 1/06, F03D 80/40

(54) **A WIND TURBINE ROTOR BLADE WITH AN ELECTRICAL HEATING SYSTEM**

(71) Applicant: Nordex Energy SE & Co. KG, 22419 Hamburg (DE)
(72) Inventor: Kremer, Jochen, 22419 Hamburg (DE); Lipka, Thomas, 22419 Hamburg (DE)
(74) Representative: Völkl Siebenson Patentanwälte - Partnerschaft mbB

(57) **Abstract**

A wind turbine rotor blade comprising a blade root, a blade tip, a leading edge, a trailing edge, a suction side, a pressure side (22) and a heatable surface area including at least one electrical heating element, wherein the heatable surface area covers a section of the leading edge and has a first edge facing the blade tip, a second edge facing the blade root, a third edge arranged on the suction side and a fourth edge arranged on the pressure side (22), characterized in that the wind turbine rotor blade comprises a first layer of an electrically insulating material, wherein the first layer is smaller than the heatable surface area and is arranged on top of the at least one electrical heating element along the leading edge and such that it extends beyond the first edge.

## Description

The invention relates to a heating system for a wind turbine rotor blade with an electrical heating system.

EP 2 667 025 A1 discloses a wind turbine rotor blade with a heating mat having two segments running in parallel along a longitudinal direction of the wind turbine rotor blade. To avoid a short circuit between the two segments, a layer of an insulating material is placed between the adjacent segments, wherein the layer is arranged underneath one of the two segments and on top of the adjacent segment.

EP 2 843 228 A1 discloses a wind turbine rotor blade with an electrical heating system including a plurality of electrical heating elements arranged on an outer surface of the wind turbine rotor blade. Each of the heating elements has a carrier layer and a heating conductor arranged on the carrier layer between two opposite edges of the heating element in a meandering pattern. The heating elements are arranged on an outer surface of the wind turbine rotor blade. Free ends of each heating conductor are connected to two electrical supply lines which are running along a length of the blade and also serve as lightning down conductors. In case of lightning, the heating elements shall provide potential equalization between the two lightning down conductors. An outer side of the heating elements is provided with an erosion protection layer.

Departing therefrom, it is an object of the invention to provide a wind turbine rotor blade with an electrical heating system that offers improved lightning protection.

This object is solved by the wind turbine rotor blade with the features of claim 1. Aspects of the invention are indicated in the dependent claims.

The wind turbine rotor blade comprises a blade root, a blade tip, , a leading edge, a trailing edge, a suction side, a pressure side and a heatable surface area including at least one electrical heating element, wherein the heatable surface area covers a section of the leading edge and has a first edge facing the blade tip, a second edge facing the blade root, a third edge arranged on the suction side and a fourth edge arranged on the pressure side, wherein the wind turbine rotor blade comprises a first layer of an electrically insulating material, wherein the first layer is smaller than the heatable surface area and is arranged on top of the at least one electrical heating element along the leading edge and such that it extends beyond the first edge.

The wind turbine rotor blade has an outer surface which corresponds to an aerodynamic surface of the wind turbine rotor blade. The wind turbine rotor blade may comprise a shell structure forming the outer surface, for example comprising two wind turbine rotor blade half shells, such as a pressure side half shell and a suction side half shell. The at least one heating element can be connected to first and second electrical supply lines so that a heating current can be guided through the at least one heating element. In this manner, the at least one heating element and the heatable surface area of the wind turbine rotor blade can be heated in order to remove accumulated ice (de-icing) and/or in order to prevent the formation of ice (anti-icing) on this surface area.

The at least one heating element may have an essentially rectangular or trapezoidal shape which is folded about the leading edge of the wind turbine rotor blade. The shape of the at least one heating element defines the heatable surface area. Typically, a plurality of heating elements will be arranged on the outer surface of the wind turbine rotor blade, together defining the heatable surface area.

The invention is based on the observation that lightning striking a wind turbine rotor blade with a suitable lightning protection system may not only damage any electrically conducting elements within the wind turbine rotor blade which are arranged near a lightning down conductor, caused by flashovers between the lightning down conductor and the electrically conducting element. In addition, the heating elements themselves may get struck by a direct lightning strike when under the influence of a high electric field strength free charge carriers (electrons or ions) are accelerated out of the heating element and contribute to the formation of a current channel. This risk may be reduced by an electrical isolation of the heating elements. However, any isolating material placed on top of the heating elements adds to the total weight of the wind turbine rotor blade and also potentially reduces the efficiency of the heating system. The isolating material may also decrease the aerodynamic performance of the wind turbine rotor blade due to unwanted alterations of the surface geometry and surface structure. Based on these considerations, the inventors found a way to achieve a significant reduction in the risk of direct lightning strikes affecting the at least one heating element using a minimum of additional material and being easy to implement.

The first layer of electrically insulating material can be handled essentially in the same way as any other layers comprised in the wind turbine rotor blade. The first layer may have an essentially rectangular or trapezoidal shape. The first layer is smaller (area-wise) than the heatable surface area, so that not all of the heatable surface area is covered by the first layer. However, the first layer and is arranged such that it extends beyond the first edge of the heating element, which is facing towards the blade tip. This means the first layer will cover in particular a section of the heatable surface at the leading edge and nearest to the blade tip - the area that based on the inventor's insights has the highest risk to be affected directly by a lightning strike. In particular, this area will not only be covered by the first layer, but there will also be an overlap of the first layer over the first edge of the heatable surface area towards the blade tip.

The first layer is placed on top of the heatable surface area. In other words, the heatable surface area is arranged below the first layer, so that the first layer forms a cover for a section of the heatable surface area. Of course, the first layer need not be placed directly on top of the heatable surface area, or directly on top of the at least one heating element. It is also possible to have any layers or coatings therebetween. Any other reference throughout this disclosure to a layer being arranged "on top" of another member is to be interpreted in this way.

In an aspect, the first layer has a second edge facing the blade root, wherein at least a section of the second edge of the first layer is arranged on top of the heatable surface area in a distance from the second edge of the heatable surface area. This means the first layer is not only smaller than the heatable surface area in terms of the total area, but is also shorter in a longitudinal direction. A section of the heatable surface area relatively near to the blade root and relatively far away from the blade tip is not covered by the first layer. The inventors found that an additional insulation by the first layer in this section is less relevant, and that a better compromise between the risk of lightning strike and the additional weight can be achieved by not covering this section.

In an aspect, the first layer has a third edge on the suction side, wherein at least a section of the third edge of the first layer is arranged on top of the heatable surface area in a distance from the third edge of the heatable surface area, and/or wherein the first layer has a fourth edge on the pressure side, wherein at least a section of the fourth edge of the first layer is arranged on top of the heatable surface area in a distance from the fourth edge of the heatable surface area. The third edge of the first layer may be arranged at a constant distance from the third edge of the heatable surface area and/or from the leading edge. The fourth edge of the first layer may be arranged at a constant distance from the fourth edge of the heatable surface area and/or from the leading edge. It was found that it may be better not to cover with the first layer, a section of the heatable surface area arranged between the third edge of the first layer and the third edge of the heatable surface area and/or between the fourth edge of the first layer and the fourth edge of the heatable surface area.

In an aspect, the wind turbine rotor blade comprises a second layer of an electrically insulating material, wherein the second layer is smaller than the heatable surface area and is arranged on top of the at least one electrical heating element along the leading edge and such that the second layer extends beyond the first edge of the heatable surface area. In general, the second layer may be arranged on top of or underneath the first layer. It may be preferred to arrange the second layer on top of the first layer. The second layer provides an additional insulation where it is needed most.

In an aspect, the first edge of the second layer in the longitudinal direction is arranged between the first edge of the heatable surface area and the first edge of the first layer. In some cases, this helps avoiding three-dimensional curvature of the first layer and/or of the second layer, in particular when these layers overlap in the longitudinal direction as well as in the perpendicular, chordwise direction.

In an aspect, the second layer has a second edge facing the blade root, wherein at least a section of the second edge of the second layer is arranged within a surface covered by the first layer and in a distance from the second edge of the first layer. This aspect is based on the same reasoning as has been explained with reference to the similar design of the first layer, only a selected section of the first layer may need to be covered by the second layer.

In an aspect, the second layer has a third edge on the suction side, wherein at least a section of the third edge of the second layer is arranged within a surface covered by the first layer and in a distance from the third edge of the first layer, and/or wherein the second layer has a fourth edge on the pressure side, wherein at least a section of the fourth edge of the second layer is arranged within a surface covered by the first layer and in a distance from the fourth edge of the first layer. The third edge of the second layer may be arranged in a constant distance from the third edge of the first layer and/or in a constant distance from the leading edge. The fourth edge of the second layer may be arranged in a constant distance from the fourth edge of the first layer and/or in a constant distance from the leading edge. This aspect is based on the same reasoning as has been explained with reference to the similar design of the first layer, only a selected section of the first layer may need to be covered by the second layer.

In an aspect, the wind turbine rotor blade comprises a third layer of an electrically insulating material, wherein the third layer is smaller than the heatable surface area and is arranged on top of the at least one electrical heating element along the leading edge and such that it extends beyond the first edge of the heatable surface area, wherein the third layer is arranged with reference to the second layer in the same manner as is defined in any of the aspects discussed above (describing the second layer) for the second layer with reference to the first layer. The third layer may be arranged on top of the second layer, which may be preferred. The third layer may also be placed underneath the second layer, and/or underneath the first layer. The third layer may also be placed between the first layer and the second layer.

In an aspect, the at least one electrical heating element comprises a plurality of electrical heating elements arranged in a row along the leading edge, wherein each of the heating elements has a first edge facing the blade tip and a second edge facing the blade root, wherein the wind turbine rotor blade comprises at least one strip of an electrically insulating material arranged on top of a first edge of one of the heating elements and on top of a second edge of an adjacent one of the heating elements. The neighboring heating elements may be arranged immediately adjacent to one another or with a gap in the range of e.g. 1 mm to 50 mm. A width of the strip may be selected so that a border section (having a width of e.g. 10 mm to 50 mm) of both neighboring heating elements is covered. In any event, the width of the strip will be smaller than a width of one of the heating elements. Any number of strips may be used, if desired one strip between each pair of neighboring heating elements, or only one strip between a number of neighboring heating elements arranged nearest to the blade tip, the number being in a range of 2 to 20, for example. The insulating strips help reducing the risk of lightning strikes at an edge of one of the heating elements.

In an aspect, the at least one electrical heating element comprises a plurality of electrical heating elements arranged in a row along the leading edge, wherein each of the heating elements has a first connecting section connected to a first electrical supply line on the suction side and a second connecting section connected to a second electrical supply line on the suction side, wherein the wind turbine rotor blade comprises at least one strip of an electrically insulating material arranged on top of the first connecting section and/or on top of the second connecting section. These insulating strips help reducing the risk of lightning strikes at or near the connecting sections.

In an aspect, the first electrical supply line is arranged between the trailing edge and the third edge of the heatable surface area, wherein the at least one strip of an electrically insulating material arranged on top of the first connecting section extends from the third edge of the heatable surface area towards the first electrical supply line or beyond and/or wherein the second electrical supply line is arranged between the trailing edge and the fourth edge of the heatable surface area, wherein the at least one strip of an electrically insulating material arranged on top of the second connecting section extends from the fourth edge towards the second electrical supply line or beyond. In this way, the entire connecting section is covered by the strip. If desired, one strip may be applied which is folded over the leading edge and covers both connecting sections.

In an aspect, the wind turbine rotor blade comprises a lightning receptor arranged at the blade tip, wherein the first edge of the heatable surface area is arranged in a distance in the range of 1 m to 4 m from the blade tip. This means an outermost section of the wind turbine rotor blade near the tip is not provided with a heatable surface area. However, improved lightning protection is obtained because the first edge of the heatable surface area is relatively far away from the lightning receptor.

In an aspect, the wind turbine rotor blade comprises at least one additional lightning receptor arranged between the trailing edge and the third edge of the heatable surface area and/or between the trailing edge and the fourth edge of the heatable surface area. The additional lightning receptor at this position can attract lightning strikes in a distance from the blade tip without running an additional risk to damage the at least one heating element.

In an aspect, the insulating material comprises glass fibers. The insulating material may consist for example of a biaxial fabric of glass fibers.

In an aspect, the at least one electrical heating element comprises a heating conductor fastened to a carrier layer, wherein in particular the heating conductor comprises a metal heating wire or a bundle of carbon fibers.

In the following, the invention is explained in greater detail based on the drawings. The figures show:
- Fig. 1: a wind turbine rotor blade in a view on the pressure side,
- Fig. 2: a section of the wind turbine rotor blade of Fig. 1 shown in greater detail, and
- Fig. 3: a section of the wind turbine rotor blade in a schematic view on the leading edge.

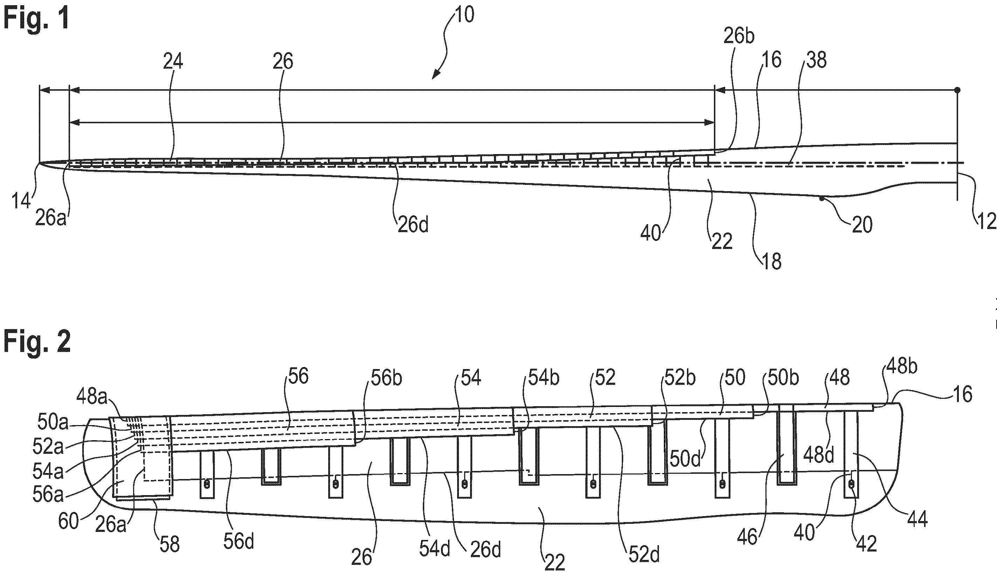

The wind turbine rotor blade 10 of Fig. 1 has a blade root 12, a blade tip 14, a leading edge 16, a trailing edge 18, a suction side 20 (away from the viewer) and a pressure side 22. The wind turbine rotor blade 10 further comprises a plurality of heating elements 24 arranged side-by-side and covering a section of the leading edge 16. Altogether, the heating elements 24 form a heatable surface area 26.

The heatable surface area 26 has an essentially rectangular shape which is folded about the leading edge 16. The heatable surface area 26 has a first edge 26a facing the blade tip 14, a second edge 26b facing the blade root 12, a third edge 26c on the suction side 20 (not shown in Figure 1) and a fourth edge 26d on the pressure side 22. The third edge 26c and the fourth edge 26d extend along the longitudinal direction of the wind turbine rotor blade 10. Also arranged along the longitudinal direction, the wind turbine rotor blade 10 has a first electrical supply line 36 (not shown in Figure 1) on the suction side 20 and a second electrical supply line 38 on the pressure side 22.

Each of the heating elements 24 is electrically connected to the first electrical supply line 36 and to the second electrical supply line 38 by respective first and second connecting sections 40. The connecting sections 40 extend essentially in a chordwise direction between the third edge 26c or the fourth edge 26d, respectively, and the respective electrical supply line 36, 38.

In the enlarged view of Fig. 2, a section of the wind turbine rotor blade 10 of Figure 1 near the blade tip 14 is shown in greater detail. The heatable surface area 26 is shown as one rectangle, only the first edge 26a and the fourth edge 26d can be seen. The various heating elements 24 by which the heatable surface area 26 is covered are not shown in Fig. 2.

The second electrical supply line 38 is also neglected in the view of Fig. 2, but the connecting sections 40 of each of the heating elements 24 are shown. These lead each to a connection point 42 where the connecting sections 40 are connected to the second electrical supply line 38, which is arranged within a wind turbine rotor blade shell member.

A first set of insulating strips 44 are arranged in a chordwise direction, having a width (arranged in the longitudinal direction of the wind turbine rotor blade 10) of about 10 cm. The first insulating strips 44 cover in particular the connecting points 42 and the connecting sections 40. Further, the first insulating strips 44 are folded about the leading edge 16, so that they extend over the entire heatable surface area 26 in the chordwise direction, from the connecting point 42 at the second electrical supply line 38 to a similar connecting point at the first electrical supply line on the suction side 20 of the wind turbine rotor blade 10, which is not shown in Figure 2.

Also shown in Fig. 2 is a set of second insulating strips 46 which are each arranged on top of a first edge of one of the heating elements 24 and on top of a second edge of an adjacent one of the heating elements 24. The second insulating strips are also folded about the leading edge 16 so that they cover the entire heatable surface area 26 in the chordwise direction.

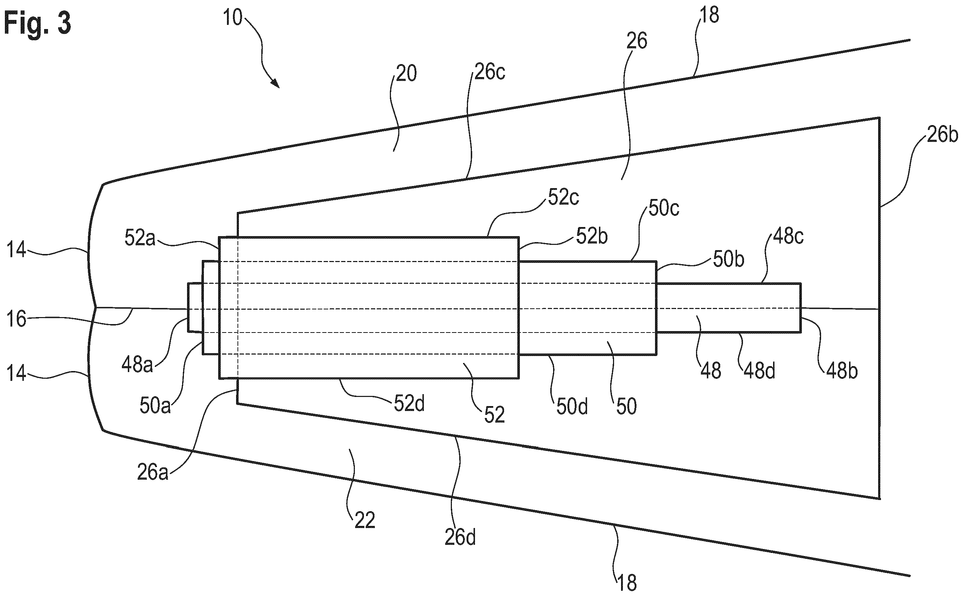

Fig. 2 further shows several layers of an insulating material, namely a first layer 48, a second layer 50, a third layer 52, a fourth layer 54 and a fifth layer 56. Each of these layers 48 to 56 extend along the longitudinal direction of the wind turbine rotor blade 10 and is folded about the leading edge 16. Each of these layers 48 to 56 has a first edge 48a, 50a, 52a, 54a, 56a facing the blade tip 14, a second edge 48b, 50b, 52b, 54b, 56b facing the blade root 12, a third edge 48c, 50c, 52c, 54c, 56c on the suction side 20 (not shown in Figure 2), and a fourth edge 48d, 50d, 52d, 54d, 56d on the pressure side 22. How these various edges are arranged with reference to one another and with reference to the first edge 26a, second edge 26b, third edge 26c and fourth edge 26d of the heatable surface area 26 will be explained based on the schematic view of Fig. 3.

Still with reference to Fig. 2, one can see a first additional layer 58 of an insulating material and a second additional layer 60 of an insulating material. The first and second additional layers 58, 60 are arranged in a chordwise direction and folded about the leading edge 16 such that they cover the entire first edge 26a of the heatable surface area 26.

In the schematic view of Fig. 3, a section of a wind turbine rotor blade 10 including the blade tip 14 is shown. The view is directed on the leading edge 16, and the suction side 20 in the pressure side 22 are shown unfolded such that one can also see the trailing edge 18 formed by the respective shell members forming the suction side 20 and the pressure side 22. The heatable surface area 26 has a trapezoidal shape. The plurality of heating elements 24 forming the heatable surface area 26 are not shown in Figure 3. The heatable surface area 26 has a first edge 26a facing the blade tip 14, a second edge 26b facing the blade root 12, a third edge 26c on the suction side 20 and a fourth edge 26d on the pressure side 22.

Also shown and indicated by the same reference numbers used in Fig. 2 are the first layer 48, the second layer 50 and the third layer 52. The fourth and fifth layers are not shown in Fig. 3 for clarity purposes.

One can see that each of the layers 48, 50, 52 is smaller than the heatable surface area 26. The first layer 48 is arranged along the leading edge 16. The first layer 48 extends beyond the first edge 26a of the heatable surface area 26 and has a first edge 48a of the first layer arranged in a distance (measured in the longitudinal direction) from the first edge 26a of the heatable surface area 26. The second edge 48b of the first layer 48 is arranged on top of the heatable surface area 26 and in a distance (measured in the longitudinal direction) from the second edge 26b of the heatable surface area 26. The third edge 48c of the first layer 48 is arranged on top of the heatable surface area 26 in a distance (measured in the chordwise direction) from the third edge 26c of the heatable surface area. The fourth edge 48d of the first layer 48 is arranged on top of the heatable surface area 26 in a distance (measured in the chordwise direction) from the fourth edge 26d of the heatable surface area 26.

The second layer 50 also extends beyond the first edge 26a of the heatable surface area 26 and has a first edge 50a placed in a distance from the first edge 26a of the heatable surface area. The first edge 50a of the second layer 50 has a section which is arranged on top of the first heating layer 48.

The third layer 52 is arranged on top of the second layer 50 and also extends beyond the first edge 26a of the heatable surface area 26. It has a first edge 52a arranged in a distance from the first edge 26a of the heatable surface area 26. This first edge 52a of the third layer 52 has a section arranged on top of the second layer 50. By means of this specific arrangement of the first, second and third layers 48, 50, 52 on top of one another with the specific overlap, the required curvature of each of these layers 48, 50, 52 is essentially limited to the curvature of the outer surface of the wind turbine rotor blade 10. No two-dimensional curvature is required to cover the edges of one of the layers underneath a certain layer.

### List of reference numerals

- 10: wind turbine rotor blade
- 12: blade root
- 14: blade tip
- 16: leading edge
- 18: trailing edge
- 20: suction side
- 22: pressure side
- 24: heating element
- 26: heatable surface area
- 26a: first edge of heatable surface area
- 26b: second edge of heatable surface area
- 26c: third edge of heatable surface area
- 26d: fourth edge of heatable surface area
- 38: second electrical supply line
- 40: connecting section
- 42: connecting point
- 44: first insulating strip
- 46: second insulating strip
- 48: first layer
- 48a: first edge of first layer
- 48b: second edge of first layer
- 48c: third edge of first layer
- 48d: fourth edge of first layer
- 50: second layer
- 50a: first edge of second layer
- 50b: second edge of second layer
- 50c: third edge of second layer
- 50d: fourth edge of second layer
- 52: third layer
- 52a: first edge of third layer
- 52b: second edge of third layer
- 52c: third edge of third layer
- 52d: fourth edge of third layer
- 54: fourth layer
- 56: fifth layer
- 58: first additional layer
- 60: second additional layer

## Claims

1. A wind turbine rotor blade (10) comprising a blade root (12), a blade tip (14 a leading edge (16), a trailing edge (18), a suction side (20), a pressure side (22) and a heatable surface area (26) including at least one electrical heating element (24), wherein the heatable surface area (26) covers a section of the leading edge (16) and has a first edge (26a) facing the blade tip (14), a second edge (26b) facing the blade root (12), a third edge (26c) arranged on the suction side (20) and a fourth edge (26d) arranged on the pressure side (22), **characterized in that** the wind turbine rotor blade (10) comprises a first layer (48) of an electrically insulating material, wherein the first layer (48) is smaller than the heatable surface area (26) and is arranged on top of the at least one electrical heating element (24) along the leading edge (16) and such that the first layer (48) extends beyond the first edge (26a) of the heatable surface area (26).

2. The wind turbine rotor blade (10) of claim 1, wherein the first layer (48) has a second edge (48b) facing the blade root (12), wherein at least a section of the second edge (48b) of the first layer (48) is arranged on top of the heatable surface area (26) in a distance from the second edge (26b) of the heatable surface area (26).

3. The wind turbine rotor blade (10) of claim 1 or 2, wherein the first layer (48) has a third edge (48c) on the suction side (20), wherein at least a section of the third edge (48c) of the first layer (48) is arranged on top of the heatable surface area (26) in a distance from the third edge (26c) of the heatable surface area (26), and/or wherein the first layer (48) has a fourth edge (48d) on the pressure side (22), wherein at least a section of the fourth edge (48d) of the first layer (48) is arranged on top of the heatable surface area (26) in a distance from the fourth edge (26d) of the heatable surface area (26).

4. The wind turbine rotor blade (10) of any of the claims 1 to 3, wherein the wind turbine rotor blade (10) comprises a second layer (50) of an electrically insulating material, wherein the second layer (50) is smaller than the heatable surface area (26) and is arranged on top of the at least one electrical heating element (24) along the leading edge (16) and such that it extends beyond the first edge (26a) of the heatable surface area (26).

5. The wind turbine rotor blade (10) of claim 4, wherein the first edge (50a) of the second layer (50) in a longitudinal direction is arranged between the first edge (26a) of the heatable surface area (26) and the first edge (48a) of the first layer (48).

6. The wind turbine rotor blade (10) of claim 4 or 5, wherein the second layer (50) has a second edge (50b) facing the blade root (12), wherein at least a section of the second edge (50b) of the second layer (50) is arranged within a surface covered by the first layer (48) and in a distance from the second edge (48b) of the first layer (48).

7. The wind turbine rotor blade (10) of any of the claims 4 to 6, wherein the second layer (50) has a third edge (50c) on the suction side (20), wherein at least a section of the third edge (50c) of the second layer (50) is arranged within a surface covered by the first layer (48) and in a predetermined distance from the third edge (48c) of the first layer (48), and/or wherein the second layer (50) has a fourth edge (50d) on the pressure side (22), wherein at least a section of the fourth edge (50d) of the second layer (50) is arranged within a surface covered by the first layer (48) and in a distance from the fourth edge (48d) of the first layer (48).

8. The wind turbine rotor blade (10) of any of the claims 4 to 7, wherein the wind turbine rotor blade (10) comprises a third layer (52) of an electrically insulating material, wherein the third layer (52) is smaller than the heatable surface area (26) and is arranged on top of the at least one electrical heating element (24) along the leading edge (16) and such that it extends beyond the first edge (26a) of the heatable surface area (26), wherein the third layer (52) is arranged with reference to the second layer (50) in the same manner as is defined in any of the claims 4 to 7 for the second layer (50) with reference to the first layer (48).

9. The wind turbine rotor blade (10) of any of the claims 1 to 8, wherein the at least one electrical heating element (24) comprises a plurality of electrical heating elements (24) arranged in a row along the leading edge (16), wherein each of the heating elements (24) has a first edge facing the blade tip (14) and a second edge facing the blade root (12), wherein the wind turbine rotor blade (10) comprises at least one strip (46) of an electrically insulating material arranged on top of a first edge of one of the heating elements (24) and on top of a second edge of an adjacent one of the heating element (24)s.

10. The wind turbine rotor blade (10) of any of the claims 1 to 9, wherein the at least one electrical heating element (24) comprises a plurality of electrical heating elements (24) arranged in a row along the leading edge (16), wherein each of the heating elements (24) has a first connecting section (40) connected to a first electrical supply line on the suction side (20) and a second connecting section (40) connected to a second electrical supply line (38) on the suction side (20), wherein the wind turbine rotor blade (10) comprises at least one strip (44) of an electrically insulating material arranged on top of the first connecting section (40) and/or on top of the second connecting section (40).

11. The wind turbine rotor blade (10) of claim 10, wherein the first electrical supply line is arranged between the trailing edge (18) and the third edge (26c) of the heatable surface area (26), wherein the at least one strip (44) of an electrically insulating material arranged on top of the first connecting section (40) extends from the third edge (26c) of the heatable surface area (26) to the first electrical supply line or beyond and/or wherein the second electrical supply line (38) is arranged between the trailing edge (18) and the fourth edge (26d) of the heatable surface area (26), wherein the at least one strip (44) of an electrically insulating material arranged on top of the second connecting section (40) extends from the fourth edge (26d) of the heatable surface area (26) to the second electrical supply (38) line or beyond.

12. The wind turbine rotor blade (10) of any of the claims 1 to 11, wherein the wind turbine rotor blade (10) comprises a lightning receptor arranged at the blade tip (14), wherein the first edge (26a) of the heatable surface area (26) is arranged in a distance in the range of 1 m to 4 m from the blade tip (14).

13. The wind turbine rotor blade (10) of any of the claims 1 to 12, wherein the wind turbine rotor blade (10) comprises at least one additional lightning receptor arranged between the trailing edge (18) and the third edge (26c) of the heatable surface area (26) and/or between the trailing edge (18) and the fourth edge (26d) of the heatable surface area (26).

14. The wind turbine rotor blade (10) of any of the claims 1 to 13, wherein the insulating material comprises glass fibers.

15. The wind turbine rotor blade (10) of any of the claims 1 to 14, wherein the at least one electrical heating element (24) comprises a heating conductor fastened to a carrier layerwind turbine rotor blade (10), wherein in particular the heating conductor comprises a metal heating wire or a bundle of carbon fibers.
